# EUROPEAN PATENT SPECIFICATION

(11) **EP 4 348 374 B1**
(45) Date of publication and mention of the grant of the patent: **18.11.2026**
(21) Application number: 22740579.2
(22) Date of filing: 02.06.2022
(51) Int. Cl.: G05D 1/00

(54) **SYSTEM FACILITATING USER ARRANGEMENT OF PATHS FOR USE BY AUTONOMOUS WORK VEHICLE**
SYSTEM, DAS DEN BENUTZERN DIE ANORDNUNG VON WEGEN ZUR VERWENDUNG DURCH AUTONOME ARBEITSFAHRZEUGE ERLEICHTERT
SYSTEME FACILITANT L'AMENAGEMENT PAR L'UTILISATEUR DE CHEMINEMENTS A UTILISER PAR UN VEHICULE DE TRAVAIL AUTONOME

(30) Priority: 02.06.2021 US 202163196027 P
(43) Date of publication of application: 10.04.2024
(60) Divisional application: 26208728.1
(73) Proprietor: The Toro Company, Bloomington, MN 55420-1196 (US)
(72) Inventor: BARBOI, Mihnea, Bloomington, Minnesota 55420-1196 (US); CURD, Derek R., Bloomington, Minnesota 55420-1196 (US); BARRAS, William T., Bloomington, Minnesota 55420-1196 (US); SKRTICH, Thomas R., Bloomington, Minnesota 55420-1196 (US); STURZL, Travis J., Bloomington, Minnesota 55420-1196 (US)
(74) Representative: J A Kemp LLP
(86) International application number: PCT/US2022/031881
(87) International publication number: WO 2022/256475

(56) References cited:
- EP-A1- 3 567 446
- WO-A1-2017/197190
- US-A1- 2018 156 622
- US-A1- 2021 070 356

## Description

This application claims the benefit of U.S. Provisional Application No. 63/196,027, filed on 2 June 2021.

EP 3567446 A1 discloses a route generating system having a region setting unit that sets, in the field, a plurality of regions including a work region where autonomous work paths being in parallel with a traveling direction of a tractor are generated and headlands where connection paths each connecting corresponding ones of the autonomous work paths are generated. A region setting unit sets the widths of the headlands (headland widths) based on the tractor information, altitude information, and the traveling direction, the widths of the headlands extending in parallel with the traveling direction.

### SUMMARY

The invention is defined in claim 1. Further aspects and preferred embodiments are defined in the dependent claims. Any aspects, embodiments and examples of the present disclosure which do not fall under the scope of the appended claims do not form part of the invention and are merely provided for illustrative purposes. The present disclosure is directed to a system facilitating user arrangement of paths for use by autonomous work vehicle. In one embodiment, data structures are stored that describe a plurality of paths defined within a field of a work region. The plurality of paths include at least one transition path used to enter or exit the field. The plurality of paths are presented to an operator via a user interface. The user interface facilitates arrangement of the plurality of paths into an ordered collection that together defines sequentially executed movements and operations of an autonomous work vehicle within the work region. The ordered collection is stored via a network-accessible data center. User selection of the ordered collection is facilitated at the work region via the data center. Downloading the ordered collection from the data center to the autonomous working vehicle is facilitated in order to perform the sequentially executed movements and operations within the work region defined in the ordered collection.

These and other features and aspects of various embodiments may be understood in view of the following detailed discussion and accompanying drawings.

### BRIEF DESCRIPTION OF THE DRAWINGS

The discussion below makes reference to the following figures, wherein the same reference number may be used to identify the similar/same component in multiple figures. The drawings are not necessarily to scale.
FIG. 1 is a diagram of an autonomous work vehicle according to an example embodiment;
FIG. 2 is a diagram of a system according to an example embodiment;
FIG. 3 is a diagram of a work region used by an autonomous work vehicle according to an example embodiment;
FIG. 4 is a diagram illustrating an Autorun example for an autonomous work vehicle according to an example embodiment;
FIG. 5 is a flowchart showing an Autorun process flow for an autonomous work vehicle according to an example embodiment;
FIGS. 6 and 7 are sequence diagrams illustrating Autoload and Autorecord process flows for an autonomous work vehicle according to example embodiments;
FIG. 8 is a diagram of elements of a control panel of an autonomous work vehicle according to an example embodiment;
FIGS. 9 is a sequence diagram illustrating use of manual controls of an autonomous work vehicle according to example embodiments;
FIG. 10 is a diagram illustrating a Follow mode example for an autonomous work vehicle according to an example embodiment;
FIG. 11 is a diagram illustrating a Pause mode example for an autonomous work vehicle according to an example embodiment;
FIG. 12 is a diagram illustrating an ordered collection forming a playlist used with an autonomous work vehicle according to an example embodiment;
FIG. 13 is a diagram illustrating allowable path configurations for a playlist according to an example embodiment; and
FIG. 14 is a flowchart showing use of a playlist according to an example embodiment.

### DETAILED DESCRIPTION

The present disclosure relates to autonomous work vehicles. Generally, an autonomous work vehicle can traverse a work area with a work implement performing a repetitive task. Examples of such tasks include mowing, snow removal, dispersing solids or liquids (e.g., salt, fertilizer, seed, water, herbicides, pesticides), soil treatment (e.g., aeration), cleaning, applying markings or coatings, etc. The autonomous vehicle is self-powered (e.g., internal combustion engine, battery, fuel cell) and self-guiding. The self-guidance of the machine may still involve human inputs, such as first defining the task to be performed and then instructing the machine to perform the task.

While the autonomy of the work vehicle can significantly reduce the need for human labor, the controls should be such that the autonomous device can be easily programmed and commanded by a user without requiring significant technical knowledge or abilities of the end user. For example, the end user may be a former worker who performed the tasks manually in the past, and now is responsible for setting up and running one or more autonomous machines to perform those same tasks. Thus, while the end user may have intimate knowledge of the task to be performed (e.g., the work area, acceptable conditions for work, estimated time to complete the task), the end user should not be assumed to have knowledge of computer systems beyond what is required to operate, for example, a smart phone.

Embodiments described herein relate to a programming and control system used for autonomous work vehicles. These systems may include the autonomous work vehicles themselves, infrastructure such as a control center, and a user device such as a smartphone or portable computer (e.g., laptop, tablet, etc.). The system includes features that allow the end user (also referred to herein as the operator) to easily access and control the autonomous work vehicle via the user device while leaving much of the complexity hidden, e.g., having more complex operations being performed by the control center and/or autonomous work vehicles.

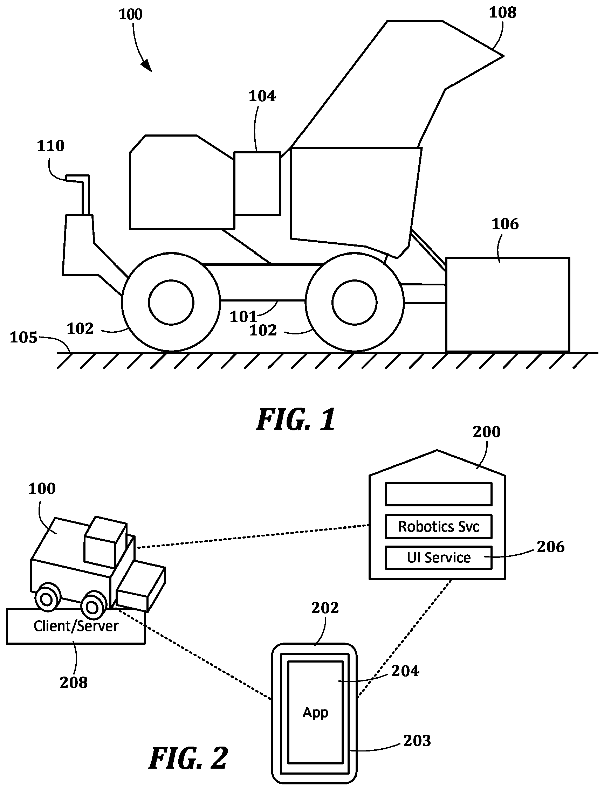

While the systems described herein may be applicable to a number of different autonomous vehicles, a simplified diagram in FIG. 1 illustrates an autonomous work vehicle 100 according to an example embodiment. As shown in this view, the autonomous work vehicle 100 may include a frame or chassis 101 with one or more shrouds that carry and/or enclose various components of the autonomous work vehicle as described below. The autonomous work vehicle 100 includes wheels 102 that provide mobility, although may instead or in addition use other movement and mobility means, such as rollers, tracks, legs, etc.

Some or all of the wheels may be driven by a propulsion system 104 to propel the autonomous work vehicle 100 over a ground surface 105. An implement 106 may be attached to a side or end of the autonomous working vehicle 100 and driven by the propulsion system 104 (e.g., via a power take off system) or by a separate auxiliary drive motor (not shown). The implement 106 may include a mower deck, aerator/dethatcher, snow thrower, snow/dirt brushes, plow blade, dispenser, or any other work-related attachment known in the art. The interface between the autonomous working vehicle 100 and work implement 106 may include a quick release mechanical coupling such that different implements can be readily switched out. Electrical couplings may also be provided on the interface between the autonomous working vehicle 100 and work implement 106.

The autonomous work vehicle 100 includes an electronics stack 108 which includes a plurality of sensors coupled to processing and communications modules. The sensors may include a global positioning system (GPS) receiver that is used estimate a position of the autonomous work vehicle 100 within a work region and provide such information to a controller. The sensors may include encoders that provide wheel rotation/speed information used to estimate autonomous work vehicle position (e.g., based upon an initial start position) within a given work region. The autonomous work vehicle 100 may also include sensors that detect boundary markers, such as wires, beacons, tags, reflectors, etc., which could be used in addition to other navigational techniques described herein.

The autonomous work vehicle 100 may include one or more front obstacle detection sensors and one or more rear obstacle detection sensors, as well as other sensors, such as side obstacle detection sensors (not shown). The obstacle detection sensors may be used to detect an obstacle in the path of the autonomous work vehicle 100 when travelling in a forward or reverse direction, respectively. The autonomous work vehicle 100 may be capable of performing work tasks while moving in either direction.

The sensors used by the autonomous work vehicle 100 may use contact sensing, non-contact sensing, or both types of sensing. For example, both contact and non-contact sensing may be enabled concurrently or only one type of sensing may be used depending on the status of the autonomous work vehicle 100 (e.g., within a zone or travelling between zones). One example of contact sensing includes using a contact bumper that can detect when the autonomous work vehicle 100 has contacted an obstacle. Non-contact sensors may use acoustic or light waves to detect the obstacle, sometimes at a distance from the autonomous work vehicle 100 before contact with the obstacle (e.g., using infrared, radio detection and ranging (radar), light detection and ranging (lidar), sound navigation ranging (sonar), etc.

The autonomous work vehicle 100 may include one or more vision-based sensors to provide localization data, such as position, orientation, or velocity. The vision-based sensors may include one or more cameras that capture or record images for use with a vision system. The vision-based sensors may also include one or more ground penetrating radars that capture or record images, which may be provided to or used by a vision system. The cameras and ground penetrating radars may be described as part of the vision system of the autonomous work vehicle 100 or may be logically grouped in different or separate systems of the autonomous work vehicle, such as an above ground vision system and an underground imaging system. Types of images include, for example, training images and/or operational images.

The one or more cameras may be capable of detecting visible light, non-visible light (e.g., infrared light), or both. Any suitable total field of view (FOV) may be used. In some embodiments, the one or more cameras may establish a total FOV relative to a horizontal plane in the range of 30 to 360 degrees, around the autonomous machine (e.g., autonomous work vehicle 100). The FOV may be defined in a horizontal direction, a vertical direction, or both directions. For example, a total horizontal FOV may be less than or equal to 360 degrees, and a total vertical FOV may be 45 degrees. In some embodiments, the total FOV may be described in a three-dimensional (3D) geometry, such as steradians. The FOV may capture image data above and below the height of the one or more cameras.

In some embodiments, the autonomous working vehicle 100 may include triple-band global navigation satellite systems (GNSS), real-time kinematic positioning (RTK) technology to autonomously drive with centimeter-level accuracy. The GNSS RTK system utilizes reference base stations that provide greater positional precision than satellite positioning alone. These base stations may be provided and maintained by an autonomous vehicle service, or public base stations may be used.

In addition to the above-listed sensors, the electronics stack 108 may include telecommunications equipment for local and long-range wireless communication. For example, the telecommunications equipment may facilitate communicating via cellular data networks (e.g., 4G and 5G data networks), WiFi, Bluetooth, etc. The electronics stack 108 may also include wired interfaces, such as Universal Serial Bus (USB), for local communications and troubleshooting. The controller of the autonomous working vehicle 100 will also include the appropriate protocol stacks for effecting communications over these data interfaces, and also include higher level protocol stacks, such as TCP/IP networking to communicate via the Internet.

The autonomous work vehicle 100 may be guided along a path, for example, manually using a manual controls 110. The manual controls 110 may be used for moving the autonomous working vehicle in regions inappropriate for autonomous operation, such as being moved through occupied public spaces, trailer loading, etc. In some embodiments, manual direction of the autonomous work vehicle 100 may be used during a training mode to learn a work region or a boundary associated with the work region. In some embodiments, the autonomous work vehicle 100 may be large enough that the operator can ride on the vehicle. In such a case, the autonomous working vehicle 100 may include foot stands and/or a seat on which the operator can stand and/or sit.

While the autonomous working vehicle 100 may be operable via on-board controls, there are advantages in controlling the vehicle via devices that are integrated into a large-scale network. In FIG. 2, a block diagram shows system components operable with an autonomous working vehicle 100 according to an example embodiment. A data center 200 includes computer servers that facilitate management, control, and monitoring of the autonomous working vehicles 100. The data center 200 can be used a central repository of vehicle data such as workspaces and work plans. The data center 200 can also gather statistics such as usage statistics (e.g., hours of operations), anomalies (e.g., excessive time needed to complete work, stuck conditions), maintenance and repair (e.g., fault codes). One advantage of a centralized data center 200 is that it can be conveniently used to manage a fleet of autonomous working vehicles 100 and operators of the vehicles. The data center 200 may include or be configured as a robot operation center (ROC) as described herein.

A mobile device 202 is also usable for some management, control, and monitoring operations of the autonomous working vehicle 100. The software 204 operable on the mobile device 202 is targeted for the end-user, and so may have a somewhat limited but simple and intuitive user interface, e.g., using a touchscreen 203. The mobile device 202 may interact directly with the autonomous working vehicle 100, such as via Bluetooth or a WiFi hotspot provided by the autonomous working vehicle 100. The mobile device 202 may also or in the alternate interact with the autonomous working vehicle 100 via the data center 200. Much of the advanced capabilities of the autonomous working vehicle 100 (e.g., detailed path planning) may take advantage of the computational power of the data center 200, although it is possible data center functions as described herein may now or in the future be implemented on the autonomous work vehicle 100. Another reason for using the data center 200 for communications is that it may be easier to ensure robust and secure communications between the data center 200 and autonomous working vehicle 100 than between the mobile device 202 and the autonomous working vehicle 100. In such an arrangement, the data center 200 may act as a relay between the mobile device 202 and the autonomous working vehicle 100, while performing checks on the commands to ensure accuracy, security, etc. In the diagrams that follow, any direct communications shown between a mobile device and an autonomous working vehicle may be alternately intermediated by a data center.

The mobile device 202 is capable of running an application 204 that provides at least user interface functionality to manage various aspects of vehicle operations, as will be described in detail below. Implementation of such an application 204 is well known in the art, and existing applications (e.g., web browsers) may be used that interact with server applications 206, 208 operating on the data center 200 and/or autonomous working vehicle 100.

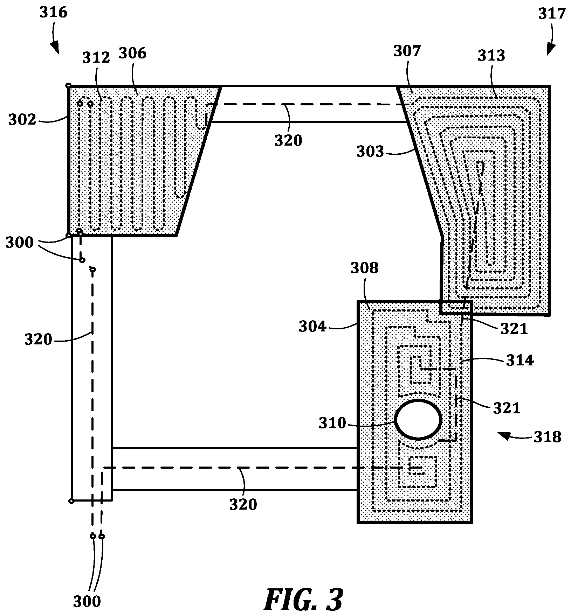

In FIG. 3, a diagram of a work region illustrates some terms and concepts used in embodiments described below. The geometry used by an autonomous work vehicle is defined by points 300, which each may include a triplet of latitude, longitude, altitude, although in some simplified representations, only latitude and longitude may be used. Note that only a small, representative example of points 300 is shown in the figure. The points 300 are used to define paths, which are collections (e.g., lists) of points 300 that may describe an autonomous job and/or some geometry in the world. Note that geometry may be inherently or expressly include more points 300 than are needed to define the geometry. For example, even though a straight line path can be fully defined by a start point and end point, the system may expressly store intermediate points or automatically generate intermediate points (e.g., via linear interpolation) at a certain minimum distance along the path. This can be used by a motion control loop of the work vehicle to ensure a locational deviation from the each point does not exceed some value.

The path geometry includes boundaries 302-304, which are paths that bound work areas 306-308. A path that bounds an area where the autonomous work vehicle is not to traverse while working (e.g., a structure within a field) defines an obstacle 310. Another type of path includes fills 312-314, which are patterns generated within boundaries 302-304 to cover some or all of area within boundaries 302-304 by the work vehicle, while avoiding obstacles 310. The fills 312-314 are drawn with dotted lines in FIG. 3. The fills 312-314 may be generated automatically given some generation parameters, such as the size of the work implement (e.g., cutting head, snow thrower, sweeper), width and turn radius of the autonomous work vehicle, and one of a plurality of different patterns. For example, fills 312, 314 use a back-and-forth pattern while fill 313 uses a concentric (spiral-like) pattern that starts by traversing a first path at or near the boundary 303, and reducing the size of the path by an offset for each traversal. The autonomous work vehicle typically runs fills 312-314 with the work implement turned on, e.g., mower blades rotating, whereas for some other paths inside and outside the work areas, the work implement may be turned off.

Also shown in FIG. 3 are fields 316-318, which include one boundary, zero or more obstacles, and one or more fills. Another type of path is shown as transit paths 320 which are non-working paths (e.g., work implement may be disengaged). The transit paths 320 are indicated using dashed lines. The transit paths can be used to connect one field to another, and thus may start within one field boundary and end within another. The system may also define traversal paths 321, which are paths that avoid obstacles specific to a boundary, fill, and transit path, and. For example, a traversal path may connect the end of a fill to the start of a transit path and the end of a transit path to the start of a fill. The traversal paths 321 can be generated dynamically on the robot, and may also be traversed with the work implement disengaged. Transit paths 320 are (mostly) outside of fields and whereas traversal paths 321 are within fields.

Both the transit paths 320 and traversal paths 321 may be dynamically generated or operator-defined. Note that the paths in FIG. 3 that are traversed by the autonomous work vehicle include fill paths 312-314, transit paths 320 and traversal paths 321, and these paths in this example can connect together to form a single contiguous path that may be traversed within the work region during a work session. Also note that the fill paths 312-313 may begin anywhere within the fields 316-318, and do not necessarily need to have starting and ending points near a border, transit path, etc. The ability to dynamically generate traversal paths 321 provides flexibility in efficiently defining the fill paths 312-314 without concern that start or end of the fills satisfies some constraint.

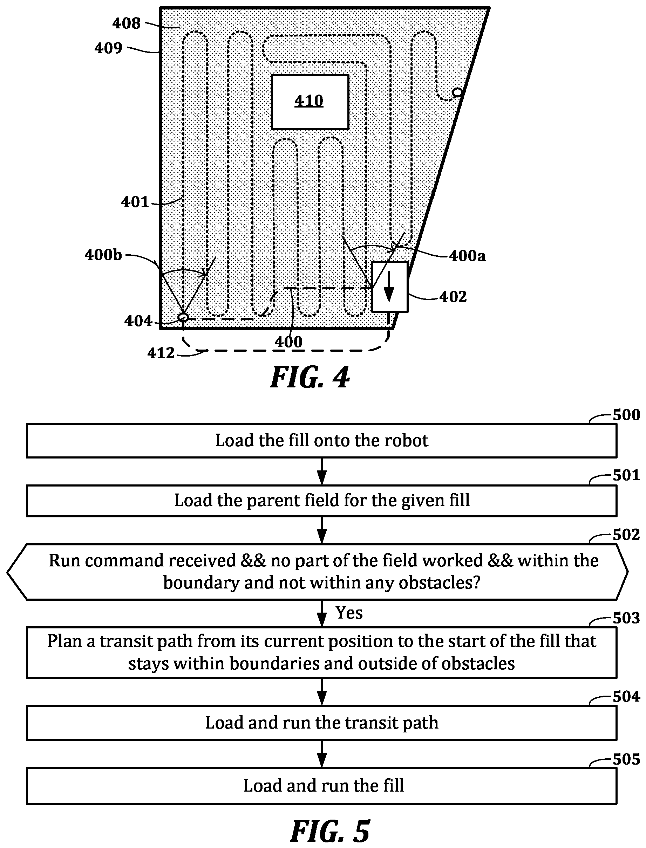

In the next section, a number of operational modes of an autonomous work vehicle according to an example embodiment are described. The first operational mode is termed "Autorun," and aspects of this mode are shown in FIGS. 4-5. As seen in FIG. 4, Autorun will plan and run a path 400, 401 that positions the autonomous work vehicle 402 at the start point 404 of a mowing fill 401, given that the autonomous work vehicle 402 is within a field 408. This feature prevents the operator from having to align the autonomous work vehicle 402 to the start point 404 of a fill 401. The operator need only drive the autonomous work vehicle 402 to an arbitrary point near the boundary of the field 408 in which the fill path 401 has been generated, press "Run," (e.g., either on the autonomous work vehicle 402 or via an application on a mobile device) and the autonomous work vehicle 402 will start its job. Note that the arrow on the autonomous work vehicle 402 indicates a direction of forward motion of the autonomous work vehicle 402. The autonomous work vehicle 402 may also be able to backup and/or rotate in place in some embodiments.

The operations involved in the Autorun mode are shown in the flowchart of FIG. 5. The fill 401 is loaded 500 onto the robot, which in this example refers to the autonomous work vehicle 402. The fill may be loaded automatically (e.g., based on geolocation) and/or through user input. For example there may be different fills for different work implements, different patterns, etc., and so even though robot may be able to automatically determine at least one fill based on geolocation, the user may need to select from a number of available fills.

At operation 501, the robot 402 loads the parent field 408 for the given fill, which identifies boundaries 409 and obstacles 410. At condition block 502, three conditions may be considered: the robot 402 receiving a "run" command, the robot has not worked any part of the field 408; and the robot is within the boundary 409 and not within any obstacles 410. If the condition block 502 returns "true," the robot 402 dynamically plans 503 a traversal path 400 from its current position to a start point 404 of the fill that stays within boundaries 409 and outside of obstacles 410. Note that in some embodiments, the robot 402 may be able to safely move outside the boundary 409, in which case an alternate path 412 may be used. This other path may 412 be considered a combination of a traversal path and a transit path, as part of it is outside the boundary 409.

After the traversal path 400 is planned, the robot 402 loads 504 the traversal path 400 and runs it immediately. In the illustrated example, the robot 402 will perform two ninety degree rotations 400a, 400b, which may be performed in place if the robot 402 is so capable, and can do so without damaging the work surface (e.g., turf). Alternatively, the robot 402 may back up and turn, perform a multi-point turn, etc., in order to make the indicated rotations 400a, 400b. These additional movements can also be included in the traversal path 400. Once the traversal path 400 completes (e.g., an end point of the path is reached), the robot loads and runs 505 the original fill 401. If the robot 402 is interrupted for any reason during the traversal path 400, the original fill is loaded again, and this process may be repeated.

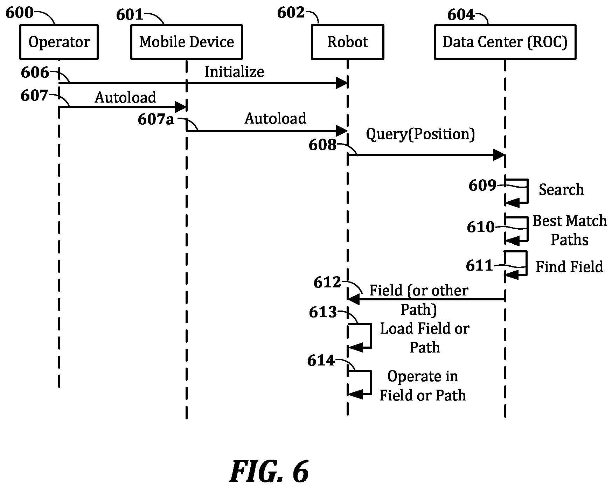

Another operational mode used within a system according to an example embodiment is known as "Autoload." Autoload finds the closest path to the robot and loads it. For example, a mobile application may provide a button "Load Closest" that also displays the path that will be loaded. The display (e.g., on a mobile device application and/or data center web page) updates in real-time as the robot moves through the world. The operations involved in Autoload are shown in FIG. 6. An operator 600 initializes 606 the robot 602 (e.g., autonomous working vehicle), which may involve at least turning on the robot 602, and optionally driving it somewhere, e.g., an arbitrary point proximate the field to be worked. If the operator 600 knows where the targeted path is, it may be assumed that the operator moves/drives the robot 602 to the path or somewhere nearby.

The operator 600 presses 607 the Autoload button on the mobile application, which is running on the mobile device 601. This may also be accomplished by interacting directly with a user interface of the robot 602, e.g., switches, display screen. As shown here, the mobile device 601 communicates the Autoload command 607a directly to the robot 602, however in other embodiments this may be transmitted to a cloud data center (e.g., ROC 604) which then relays the command to the robot 602.

In response to the Autoload command, the robot 602 queries 608 the ROC 604 with its current position. The ROC 604 searches 609 through all paths within some distance (e.g., 1 mile) of the robot 602, and returns 610 the best match. If the nearest paths are fields, the robot's position is checked 611 against these fields to determine if the robot is within any of the boundaries. If it is, this field data 612 is returned, along with other appropriate data such as fill path, boundary data, and obstacle data. If the robot is within multiple fields, the most recently run fill path for the field may be returned with field data 612. If the robot is not within any fields, the closest path is returned with field data 612, e.g., a transit path. The robot loads 613 the returned path and operates 614 there. If a fill path of the field is loaded 613, the robot 602 may start work, whereas if a transit path is loaded 613, the robot 602 may follow the transit path until a field is entered, upon which a field path may then be loaded (not shown) and a traversal path may optionally be generated.

Another operational mode used within a system according to an example embodiment is known as "Autorecord." Autorecord is a system for recording the boundary of a work area, generating a fill to cover that area, and loading that path to the robot in one step. An operator 700 starts Autorecord by pressing 706 a physical button on the robot 702, or optionally pressing 707 a software button in the mobile device 701. The mobile device 701 may communicate the Autorecord command directly to the robot 702 as shown, or a data center 704 (e.g., ROC) may relay the command.

The robot's position 708 is transmitted to the data center 704. The data center 704 uses the robot's position to set 709 metadata fields required for recording, which the metadata 710 then being returned to the robot. The position can reverse geocoded to obtain an address, which is part of the metadata 710 and used to automatically name the resulting path by the data center 704. If the given address has already been used for a path, an incrementing number is added to the end of name of the path.

The closest base station to the robot is chosen 711 for this path, and toggled on to provide GPS RTK corrections to the robot 702. The robot 702 is put into a recording mode 712, and saves the metadata 710 returned by the data center 704. In this example the recording mode 714 after receiving inputs 712, 713 from both the ROC 704 and the operator 700. Note that input 713 could alternately originate from the mobile device 701.

In the recording mode 714, the operator 700 drives the robot 702 around boundaries and obstacles until sufficient location data is recorded to define the field is recorded. The operator 700 sends and instruction 715 to the robot 702 to upload the recorded location data, either directly as shown or via the mobile device 701. The recorded field data 716 is uploaded to the data center 704, along with the robot's current heading. The data center 704 generates a fill path 717 and returns the fill 718 to the robot 702. Note that the fill path may be formed such that a start of the infill lines aligns with the robot's current heading. In other embodiments, the fill path 717 may be use some other start point, and a dynamic traversal path can be generated.

The physical characteristics of the robot 702 (e.g., robot dimensions, turn radius, work implement size, work implement mounting location) used to record the field may also be used as inputs to the algorithm used to generate the fill path 717, as these physical characteristics affect ability of the robot to work along a geometry of the fill path (e.g., safe proximity to boundaries, minimum turn radius, discharge location and required clearance). Different robots may require different parameters due to different turning ability, widths, work implement sizes, etc. The robot 702 loads 719 the newly generated fill, and may then begin work operations 720, e.g., by directly moving and working along the fill path 717 or by first moving along a traversal path before working along the fill path 717.

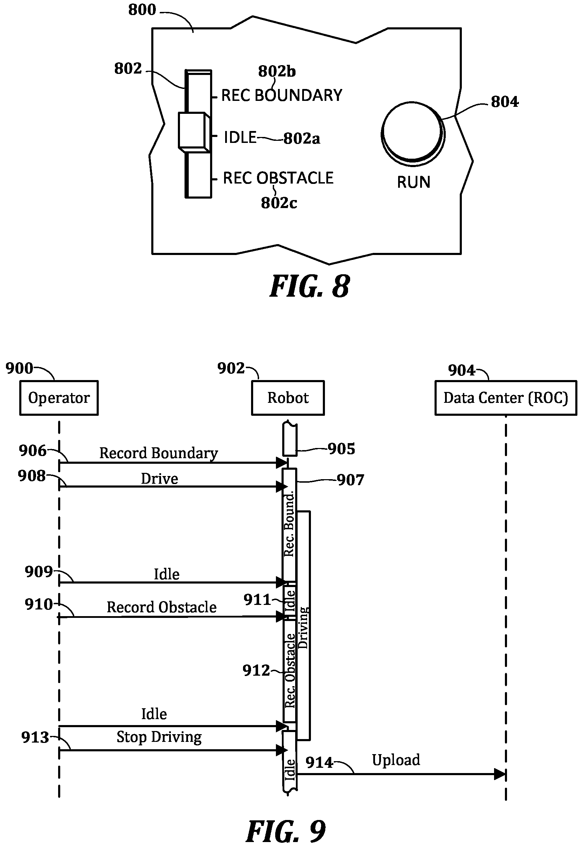

As seen in the diagram of FIG. 8, a control panel 800 of a robot includes a physical interface that enables the three functions outlined above, Autorecord, Autoload, and Autorun. The control panel 800 is shown with a three-position switch 802 and a run button 804. It will be understood that other switch configurations may be used (e.g., slide, toggle or rotary for the three positon switch and/or run switch). The switch 802 is responsible for managing recording state. In the idle position 802a, the robot is in an idle state and does not record. In the recording boundary position802b, the robot records the external boundary of the field. In the recording obstacle position802c, the robot records internal obstacles within the field.

This feature allows an operator to plan and execute an autonomous job without needing to interact with a software interface, or without the operator needing be trained on specific terminology. In one embodiment, they can do so efficiently with only two physical inputs, by moving the recording switch 802 once and pressing the run button 804 once, the driving the robot around the boundary or obstacle. In FIG. 9, a sequence diagram shows an operational flow applicable to a physical control panel as shown in FIG. 8.

At the start, the robot 902 is in an idle state 905 (not recording, no path loaded). The operator 900 sets 906 the recording switch 802 to "Recording Boundary" (or "Recording Obstacle" could be set instead). This setting 906 also implies activating the run button 804 after positioning the recording switch 802. The robot 902 triggers the Autorecord flow, and the robot 902 enters a recording mode 907. The operator 900 provides operator inputs 908 to drive the robot around (e.g., via manual controls 110 as seen in FIG. 1), switching freely between the three recording switch states, as indicated by inputs 909, 910 and recording modes 911, 912. Note that the driving inputs 908 may be repeatedly provided during these modes 907, 911, 912.

As noted above, the state change commands 906, 909, 910 can be achieved by setting the recording state of the three-way recording switch 802 (see FIG. 8) then pressing the run button 804. The position of the recording switch 802 is ignored once the run 804 button is pressed, and pressing the run button 804 again will stop any recording in progress. An indicator may be used to indicate recording is in progress, such as lighting up the button 804 when recording, and/or lighting up the labels 802b,c on or near the recording switch 802.

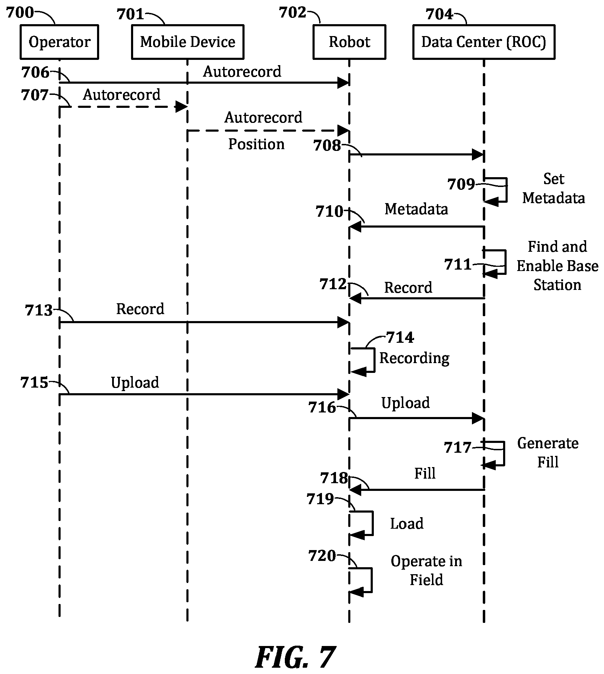

Once the operator 900 has completed mapping out the boundaries and obstacles, the operator stops driving via operator input 913 and the gathered data is uploaded 914 to the ROC 904. Note that a similar uploading may occur after each recording mode 907, 912 is complete, or at one time as shown. The recording modes 907, 912 and uploading 914 may include processes shown in FIG. 7 for the Autorecord process flow. Thereafter, the robot may trigger Autoload flow as shown in FIG. 6 to load the recorded field and any fill paths generated for the field, and then Autorun flow may be performed as shown in FIG. 5 to execute the fill paths.

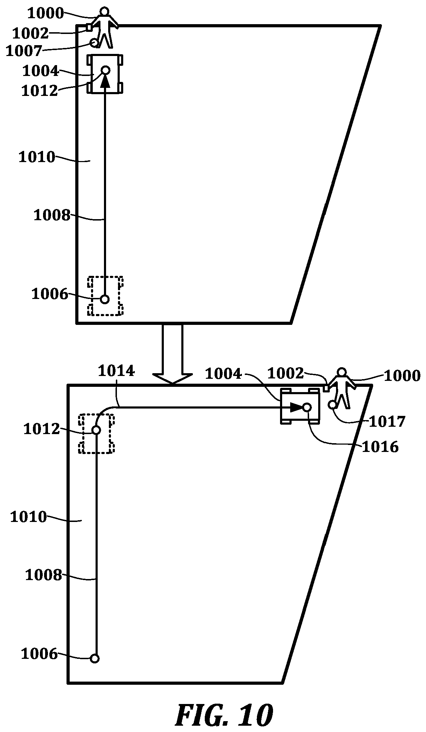

Another operational mode used within a system according to an example embodiment is known as "Follow" mode. In Follow mode, the robot follows an operator as long as the operator is continuously sending a following signal, e.g., continuously pressing a button on the mobile application, for example. In FIG. 10, a simplified diagram illustrates the Follow mode according to an example embodiment. An operator 1000 has a mobile device 1002 with an application loaded on it that initiates the operation, e.g., communicates with a robot 1004 via a ROC (not shown) or other data center. The upper part of FIG. 10 illustrates a first time where the robot 1004 is in the Follow mode in a field 1010, and the lower part of FIG. 10 shows a second time.

To begin, the operator 1000 presses and holds "Follow" (e.g., a "Follow" button on a touchscreen) on a mobile application that executes on the mobile device 1002. The application repeatedly transmits the user location 1007 at a relatively short time period between updates, e.g., every 0.2s. The robot 1004 plans a path 1008 (e.g., a Dubbins path) from its initial location 1006 to the operator's location 1007. The robot 1006 loads the dynamic path 1008 and runs it, stopping at a point 1012 that is a predefined separation distance (e.g., 2m) from the latest reported location 1007 of the operator 1000. This is shown being repeated in the lower part of FIG. 10, where the robot 1004 has moved from the previous point 1012 to a new point 1016 that is offset from the operator's new location 1017. The new path 1014 is added to the previous path 1008 to build a path that bounds the field 1010 and/or an obstacle within the field 1010. The robot 1004 records its vehicle locations during this process. The vehicle locations can later being uploaded to a data center to define the field 1010, as well as generate a fill path for the field 1010.

Note that the operator 1000 may hold the "Follow" button continuously while moving from point to point, or may first move to a waypoint and then hold this button while at rest, e.g., drawing out straight line paths. Generally, if the reported location changes by some distance (e.g., at least 2m) while the "Follow" button is activated, the robot may generate, load, and run a new path to the new location If the user stops pressing the "Follow" button, the robot stops.

If the robot does not receive a location update message for some amount of time (e.g., 1s), it exits Follow mode and stops moving. This may occur if either the mobile device 1002 or the robot 1006 loses connection, a cloud service fails, or some other error occurs (e.g., bad message, application crashes). There may be other triggering events that cause the robot 1006 to exit Follow mode, e.g., positioning error in the mobile device 1002 reports a location that is unreasonably far away (e.g., greater than 200m from the robot's current position) or location changes that represents an unreasonably high velocity of the operator 1000 (e.g., greater than 15 km/hr).

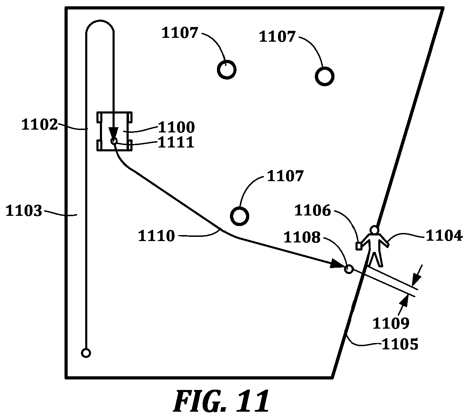

Another operational mode used within a system according to an example embodiment is known as Summon. Summon calls the robot to the edge of a boundary closest to the user. In FIG. 11, a diagram shows an example of the Summon operation. A robot 1100 has a fill 1102 loaded and is currently traversing the fill 1102 in field 1103. An operator 1104 sends the Summon command via a mobile device 1106, which contains the location of the operator 1104. The operator 1104 may be outside the boundary 1105, and also may be inside the boundary 1105 in some embodiments.

The robot 1100 loads the field information, including boundaries 1105 and obstacles 1107. The operator's position is projected to a target point 1108 at or near the boundary 1105, and the robot 1100 plans a traversal path 1110 from current location point 1111 to the target point 1108 which avoids the obstacles 1107. Note that if the operator 1104 is inside the boundary, the point 1108 may be defined as being a safety distance 1109 (e.g., 2m) from the operator 1104. This safety distance 1109 may still be enforced if the operator 1104 is on the boundary 1105 or closer than the safety distance 1109 to the boundary 1105. The robot 1100 loads and runs this traversal path 1110. Once the robot 1100 reaches the point 1108 on the boundary 1105, it stops and turns its engine off. The Summon command allows the operator 1104, for example, to stop the work on the fill 1102 if a dangerous condition is seen, perform maintenance (e.g., refuel), etc. If operator 1104 sends a pause command to the robot 1100 after it has been summoned, the robot 1100 unloads the traversal path 1110 and discards it. The robot 1100 may thereafter continue where it left off on the fill 1102, e.g., location point 1111.

Note that the paths and fill generation described above use the location detection (e.g., GPS) in the autonomous work vehicle and/or mobile device. In other embodiments, the user can create paths using a computer program, e.g., an editor that allows defining the paths overlaid on a map. For example, the operator can use the field editor program to display a map image of the general area to be worked. This can be done through any combination of text queries (e.g., based on street address and/or geolocation coordinates) and manual zooming and panning of the map display. One the target area is displayed, the operator clicks out points on the map that together define the boundary of the field to be mowed. If (internal) obstacles are to be added, they are similarly clicked out at this time. Once the boundary is known to the ROC, the ROC is instructed (by the operator) to generate a fill for the field. The operator may provide additional data before the fill is auto-generated, such as the robot model, type of work implement, type of fill desired (e.g., back-and-forth or circumferential), etc. Typically, this is done using a desktop or laptop computer, although is also possible to implement on a mobile device.

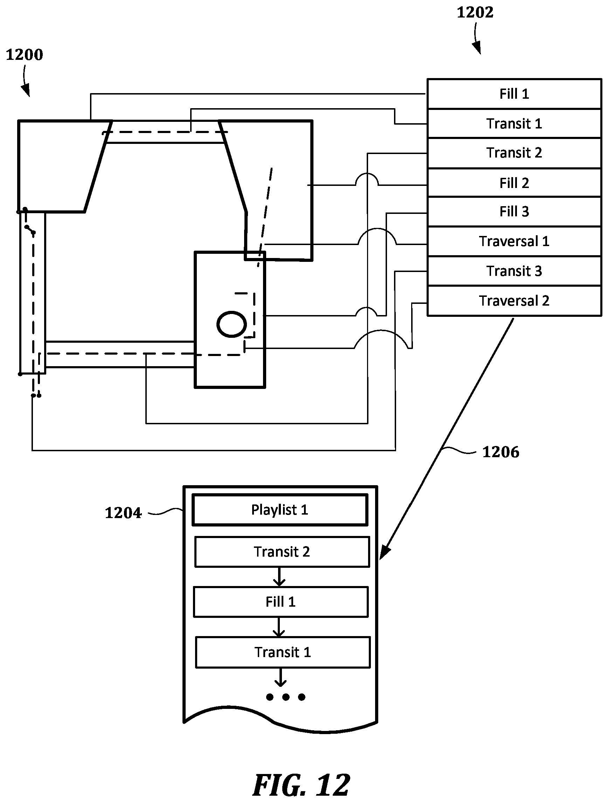

Using the processes described above, an operator can generate numerous paths in a work area. In some embodiments, an operator can use these multiple path descriptions to form a playlist, which is a collection (e.g., ordered list) of paths and fills. Each entry in the playlist is a playlist item, and each item may be looped an arbitrary number of times. For example, an operator may wish the autonomous work vehicle to work an area in which a number of transit paths, fills, and traversals have been previously defined. In FIG. 12, a diagram shows an example of a playlist according to an example embodiment.

In FIG. 12, a work region 1200 is shown, which corresponds to the region shown in FIG. 3. This region may be presented diagrammatically to the operator, e.g., as graphical components (e.g., polylines, closed shapes) fills overlaid on a map (e.g., aerial or satellite photograph map, graphical map). For clarity, the fields are shown without fills, and it is assumed that each field represents one or more fills. The operator has previously created data structures 1202 that correspond to the paths and fills in the work region 1200, as well having created data structures (not shown) for other objects such as boundaries and obstacles. These data structures 1202 are shown in an arbitrary order, and each can be inspected by the operator in a playlist application by selecting a graphic on the map or a list of named graphical object.

Note that the illustrate data structures 1202 include traversal paths, which assumes that the user can manually create traversals and/or dynamically created traversals can be saved. In other embodiments, traversal paths may be purely dynamic, e.g., created during each work session for just that session, in which case traversals may not be stored within the data structures 1202 or visible on a representation of the work region 1200. When forming playlists as described below, the system may still be able to determine an allowable sequence, e.g., moving between adjacent or overlapping fields, even if the traversal paths are not explicitly listed or displayed.

After two or more fills have been created as described above, the operator can create a new playlist, e.g., via interacting with the data center (e.g., ROC) using a client program, such as a mobile application, web browser, etc. The user creates and names a new playlist, shown as ordered collection 1204, and then adds items to the ordered collection 1204, as indicated by arrow 1206. If the item to be added is a field, the user will also select a fill, as fills may be specific to particular robots and work implements.

The assembly of data structures 1202 into an ordered collection 1204 playlist may confirm certain rules to ensure the resulting sequence is achievable. For example, if the item last added was a path p1, and the next item to be added is a path p2, then new path p1 should be in contact with the previous path p2 such that the robot can unambiguously transition from p1 to p2. Note that this contact may not require that the paths p1 and p2 share a point. In some cases, of the end of p1 is offset from the beginning of p2 by some reasonably small amount threshold distance (e.g., 1% of path length, 1 meter, etc.), in which case the system may be able to use the paths p1 and p2 adjacently in a playlist.

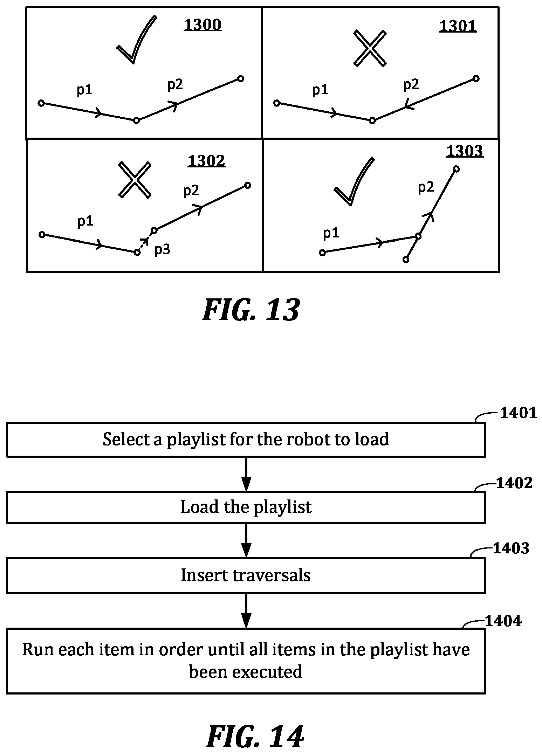

In FIG. 13, a diagram illustrates examples of adjacent paths that may or may not be co-adjacent in a playlist according to an example embodiment. The examples in FIG. 13 assume a path includes an ordered set of points from start to end, as indicated by the arrows on the different paths. Thus, while the paths in block 1300 and block 1301 have the same geometry, the paths in block 1301 cannot be used together because they are in opposing directions, and so the vehicle cannot transition from the end of p1 to the beginning of p2, at least not within some reasonable offset. The paths in block 1302 are too far separated to be used adjacently, although it may be possible to unambiguously construct a connecting path p3, assuming there are no obstacles between the end of p1 and the beginning of p2. The paths in block 1303 do share a point, so even if the last point of p1 is not close to the start point of p2, it may be allowable to enter path p2 this way, e.g., if the heading of the two paths p1, p3 is within some limit, e.g., ±30°.

Another rule that may be considered for forming a playlist is where the last item added is a path p1, and the next item to be added is a field f1. In such a case, the end point of path p1 should be somewhere on or within the boundary of the field f1, although this can be relaxed as described above to account for reasonably small gaps between the path end point and the field boundary. There is a converse of this rule where the last item added is a field f1 and the next item to be added is a path p1. The only difference in this rule is that the start point of p1, not the end point, should be within, on or reasonably close to the boundary of f1. In the case where the last item added is a field f1, and the next item to be added is a field f2, then the boundaries of both items should intersect, overlap, and/or be reasonably close as defined above.

In FIG. 14, a flowchart shows a procedure used to work a region using a predefined playlist according to an example embodiment. The operator (e.g., using an application on a mobile device) selects 1401 a playlist for the robot to load. The robot loads 1402 the playlist by downloading information about all items, which may be formatted as an ordered collection (e.g., array, linked list, graph, etc.). The information in the ordered collection includes the order of execution and path information for every item. Both boundary and fill information are also loaded 1401 for each field item.

Traversals may be inserted 1403 between each fill-to-path or path-to-fill transition. For item transitions that are fill-to-path, the robot may dynamically plan a traversal that connects the end point of a fill to the start point of the transition path. For item transitions that are path-to-fill, the robot may dynamically plan a traversal that connects the end point of the transition path to the start point of the fill. Each traversal is formed based on the start pose, end pose, boundary, and obstacles. The robot runs 1404 each item in order until all items in the playlist have been executed.

It is noted that the terms "have," "include," "comprises," and variations thereof, do not have a limiting meaning, and are used in their open-ended sense to generally mean "including, but not limited to," where the terms appear in the accompanying description and claims. Further, "a," "an," "the," "at least one," and "one or more" are used interchangeably herein. Moreover, relative terms such as "left," "right," "front," "fore," "forward," "rear," "aft," "rearward," "top," "bottom," "side," "upper," "lower," "above," "below," "horizontal," "vertical," and the like may be used herein and, if so, are from the perspective shown in the particular figure, or while the machine is in an operating configuration. These terms are used only to simplify the description, however, and not to limit the interpretation of any embodiment described. As used herein, the terms "determine" and "estimate" may be used interchangeably depending on the particular context of their use, for example, to determine or estimate a position or pose of a vehicle, boundary, obstacle, etc.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g. 1 to 5 includes 1, 1.5, 2, 2.75, 3, 3.80, 4, and 5) and any range within that range.

The various embodiments described above may be implemented using circuitry, firmware, and/or software modules that interact to provide particular results. One of skill in the arts can readily implement such described functionality, either at a modular level or as a whole, using knowledge generally known in the art. For example, the flowcharts and control diagrams illustrated herein may be used to create computer-readable instructions/code for execution by a processor. Such instructions may be stored on a non-transitory computer-readable medium and transferred to the processor for execution as is known in the art. The structures and procedures shown above are only a representative example of embodiments that can be used to provide the functions described hereinabove.

The foregoing description of the example embodiments has been presented for the purposes of illustration and description. It is not intended to be exhaustive or to limit the embodiments to the precise form disclosed. Many modifications and variations are possible in light of the above teaching. Any or all features of the disclosed embodiments can be applied individually or in any combination are not meant to be limiting, but purely illustrative. It is intended that the scope of the invention be limited not with this detailed description, but rather determined by the claims appended hereto.

## Claims

1. A method for operating an autonomous vehicle (100, 402) within a work region (1200) having a plurality of fields (316-318), each field of the plurality of fields having a work area (306-308) defined by a boundary (302-304) within said field, comprising:
storing a plurality of data structures (1202), each data structure describing a path of a plurality of paths, the plurality of paths comprising at least two fill paths (312-314) and at least one transit path (320),
the at least two fill paths comprising a first fill path (312) within a first work area (306) defined by a first boundary (302) within a first field (316) and a second fill path (313) within a second work area (307) defined by a second boundary (303) within a second field (317), the first field (316) and the second field (317) being different fields of the plurality of fields (316-318), and
the at least one transit path being used to connect the first field (316) to the second field (317);
presenting a plurality of graphic objects, each graphic object representing a data structure of the plurality of data structures, to a user via a user interface;
arranging, by the user selecting the graphic objects via the user interface, selected paths from the plurality of paths, the selected paths comprising the at least two fill paths and the at least one transit path, into an ordered collection (1204) that together defines sequentially executed movements and operations of the autonomous work vehicle (100, 402) within the work region;
storing the ordered collection via a network-accessible data center (200, 704);
selecting, by an operator, the ordered collection at the work region via the data center; and
downloading the ordered collection from the data center to the autonomous working vehicle in order to perform the sequentially executed movements and operations within the work region defined in the ordered collection.

2. The method of claim 1, further comprising:
defining, by a user, boundary data that defines a boundary (303, 409) of at least one of the plurality of fields (316-318, 408); and
auto-generating one or more of the at least two fill paths (312-314, 401) at the data center (200, 704) such that the fill path covers an area within the boundary.

3. The method of claim 2, further comprising defining, by a user, obstacle data describing one or more obstacles (310, 410) within the field (316-318, 408), wherein the auto-generating of the fill path (312-314, 401) further involves avoiding the obstacles within the field.

4. The method of claim 3, wherein the boundary data and the obstacle data are generated by an operator driving the autonomous working vehicle (100, 402) along paths that define the boundary (303, 409) and the one or more obstacles (310, 410), the autonomous working vehicle recording locations of the paths and sending the locations to the data center (200, 704).

5. The method of claim 3, wherein the boundary data and the obstacle data are generated by a mobile device (202, 701) of an operator sending locations to the data center (200, 704) and the autonomous working vehicle (100, 402) moving to the locations within a separation distance, the locations being sent to the data center to define the boundary (303, 409) and the one or more obstacles (310, 410).

6. The method of claim 3, wherein the boundary data and the obstacle data within the field (316-318, 408) are generated by an operator clicking on a computer generated map of the work region (1200) to create paths that define the boundary (303, 409) and the one or more obstacles (310, 410).

7. The method of claim 2, further comprising
positioning the autonomous work vehicle (100, 402) at an arbitrary point proximate to the boundary (303, 409) of the field (316-318, 408);
receiving a signal from an operator to run the autonomous work vehicle (100, 402) after positioning at the arbitrary point;
downloading the fill path (312-314, 401) and the boundary data to the autonomous work vehicle from the data center (200, 704);
dynamically generating and loading a traversal path (400) from the arbitrary point to a start point of the fill path; and
moving the autonomous work vehicle along the traversal path to the start point (404) of the fill path and performing work along the fill path.

8. The method of any one of claims 2-7, wherein the transit path (320) is used to exit the field (316-318, 408), and wherein arranging, by a user, the selected paths into the ordered collection (1204) further comprises confirming that a start point of the transit path is at least one of: within a boundary (303, 409) of the field; on the boundary of the field; and within a threshold distance of the boundary of the field.

9. The method of claim 8, wherein an end point of the fill path (312-314, 401) is distant from the start point of the transit path (320), the method further comprising auto-generating a traversal path (400) within the field between the end point of the fill path and the start point of the transit path.

10. The method of any one of claims 1-9, further comprising, while the autonomous working vehicle (100, 402) is performing the sequentially executed movements on one of the plurality of paths within the work region:
receiving a summon signal from a mobile device (202, 701) of an operator;
determining a location of an operator proximate to a boundary (303, 409) of the field (316-318, 408);
determining a traversal path (400) from a current location of the autonomous working vehicle and the location of the operator;
stopping the sequentially executed movements and moving the autonomous working vehicle along the traversal path; and
stopping the autonomous working vehicle on the traversal path at a predefined safety distance from the location of the operator.

11. The method of any one of claims 1-10, further comprising:
positioning the autonomous work vehicle (100, 402) within the field (316-318, 408);
receiving a first signal from a mobile device (202, 701) of an operator to record a geometry of the field, the geometry comprising at least one of a boundary (303, 409) of the field and an obstacle (310, 410) within the field;
determining locations of the mobile device as the operator moves along the geometry;
autonomously moving the autonomous work vehicle along the locations of the mobile device, wherein the autonomous work vehicle records vehicle locations while moving and stops moving based on detecting the autonomous work vehicle is within a predefined separation distance of a latest location of the mobile device;
receiving a second signal from the operator to stop recording the geometry;
uploading the vehicle locations to the data center (200, 704);
generating a fill path (312-314, 401) for the field based on the vehicle locations; and
storing the fill path in the data structures (1202), the plurality of paths comprising the fill path,
wherein, optionally, for each of the locations of the mobile device, the autonomous vehicle plans a Dubins path from a current vehicle location to the location of the mobile device.

12. The method of claim 2, further comprising defining, by a user, the at least one transit path (320).

13. The method of any one of the preceding claims, wherein the at least two fill paths (312-314, 401) comprise at least two fill paths defined in the same field of the plurality of fields (316-318, 408); and
the arranging into an ordered collection comprises selecting one of the graphic objects representing the data structures describing the at least two fill paths defined in the same field.

14. A data center (200, 704) coupled to a wide area network and comprising one or more computers configured to perform the method of any one of claims 1-13.

15. A computer-readable medium storing instructions operable to cause the autonomous working vehicle (100, 402) of any one of claims 1-13 to perform the method of any one of claims 1-13.

## Patentansprüche

1. Verfahren zum Betreiben eines autonomen Fahrzeugs (100, 402) innerhalb eines Arbeitsbereichs (1200) mit einer Vielzahl von Feldern (316-318), wobei jedes der Vielzahl von Feldern einen Arbeitsbereich (306-308) aufweist, der durch eine Begrenzung (302-304) innerhalb des Feldes definiert ist, umfassend:
Speichern einer Vielzahl von Datenstrukturen (1202), wobei jede Datenstruktur einen Pfad aus einer Vielzahl von Pfaden beschreibt, wobei die Vielzahl von Pfaden mindestens zwei Füllpfade (312-314) und mindestens einen Transitpfad (320) umfasst,
wobei die mindestens zwei Füllpfade umfassen: einen ersten Füllpfad (312) innerhalb eines ersten Arbeitsbereichs (306), der durch eine erste Begrenzung (302) innerhalb eines ersten Feldes (316) definiert ist, und einen zweiten Füllpfad (313) innerhalb eines zweiten Arbeitsbereichs (307), der durch eine zweite Begrenzung (303) innerhalb eines zweiten Feldes (317) definiert ist, wobei das erste Feld (316) und das zweite Feld (317) unterschiedliche Felder der Vielzahl von Feldern (316-318) sind, und
wobei der mindestens eine Transitpfad dazu dient, das erste Feld (316) mit dem zweiten Feld (317) zu verbinden;
Darstellen einer Vielzahl von grafischen Objekten, wobei jedes grafische Objekt eine Datenstruktur aus der Vielzahl von Datenstrukturen darstellt, für einen Benutzer auf einer Benutzeroberfläche;
Anordnen, indem der Benutzer die grafischen Objekte auf der Benutzeroberfläche auswählt, ausgewählter Pfade aus der Vielzahl von Pfaden, wobei die ausgewählten Pfade die mindestens zwei Füllpfade und den mindestens einen Transitpfad umfassen, zu einer geordneten Sammlung (1204), die gemeinsam nacheinander ausgeführte Bewegungen und Vorgänge des autonomen Arbeitsfahrzeugs (100, 402) innerhalb des Arbeitsbereichs definieren;
Speichern der geordneten Sammlung durch ein über ein Netzwerk zugängliches Rechenzentrum (200, 704);
Auswählen der geordneten Sammlung durch einen Bediener im Arbeitsbereich durch das Rechenzentrum; und
Herunterladen der geordneten Sammlung vom Rechenzentrum auf das autonome Arbeitsfahrzeug, um die sequenziell ausgeführten Bewegungen und Vorgänge innerhalb des in der geordneten Sammlung definierten Arbeitsbereichs durchzuführen.

2. Verfahren nach Anspruch 1, das ferner umfasst:
Definieren von Begrenzungsdaten durch einen Benutzer, die eine Begrenzung (303, 409) mindestens eines der zahlreichen Felder (316-318, 408) definieren; und
automatisches Erzeugen eines oder mehrerer der mindestens zwei Füllpfade (312-314, 401) im Rechenzentrum (200, 704), so dass der Füllpfad einen Bereich innerhalb der Begrenzung abdeckt.

3. Verfahren nach Anspruch 2, das ferner das Definieren von Hindernisdaten durch einen Benutzer umfasst, die ein oder mehrere Hindernisse (310, 410) innerhalb des Feldes (316-318, 408) beschreiben, wobei das automatische Erzeugen des Füllpfads (312-314, 401) ferner das Umfahren der Hindernisse innerhalb des Feldes umfasst.

4. Verfahren nach Anspruch 3, wobei die Begrenzungsdaten und die Hindernisdaten von einem Bediener erzeugt werden, der das autonome Arbeitsfahrzeug (100, 402) entlang von Pfaden fährt, die die Begrenzung (303, 409) und das eine oder die mehreren Hindernisse (310, 410) definieren, wobei das autonome Arbeitsfahrzeug die Positionen der Pfade aufzeichnet und die Positionen an das Rechenzentrum (200, 704) sendet.

5. Verfahren nach Anspruch 3, wobei die Begrenzungsdaten und die Hindernisdaten durch eine mobile Vorrichtung (202, 701) eines Bedieners erzeugt werden, die Standorte an das Rechenzentrum (200, 704) sendet, und wobei sich das autonome Arbeitsfahrzeug (100, 402) zu den Standorten innerhalb eines Abstands bewegt, wobei die an das Rechenzentrum gesendeten Positionen dazu dienen, die Begrenzung (303, 409) und das eine oder die mehrere Hindernisse (310, 410) zu definieren.

6. Verfahren nach Anspruch 3, wobei die Begrenzungsdaten und die Hindernisdaten innerhalb des Feldes (316-318, 408) dadurch erzeugt werden, dass ein Bediener auf eine computergenerierte Karte des Arbeitsbereichs (1200) klickt, um Pfade zu erstellen, die die Begrenzung (303, 409) und das eine oder die mehreren Hindernisse (310, 410) definieren.

7. Verfahren nach Anspruch 2, das ferner umfasst
Positionieren des autonomen Arbeitsfahrzeugs (100, 402) an einem beliebigen Punkt in der Nähe der Begrenzung (303, 409) des Feldes (316-318, 408);
Empfangen eines Signals von einem Bediener, um das autonome Arbeitsfahrzeug (100, 402) nach der Positionierung an dem beliebigen Punkt in Betrieb zu nehmen;
Herunterladen des Füllpfads (312-314, 401) und der Begrenzungsdaten aus dem Rechenzentrum (200, 704) auf das autonome Arbeitsfahrzeug;
dynamisches Erzeugen und Laden eines Fahrpfads (400) vom beliebigen Punkt zu einem Startpunkt des Füllpfads; und
Bewegen des autonomen Arbeitsfahrzeugs entlang des Fahrpfads zum Startpunkt (404) des Füllpfads und Durchführen von Arbeiten entlang des Füllpfads.

8. Verfahren nach einem der Ansprüche 2-7, wobei der Transitpfad (320) zum Verlassen des Feldes (316-318, 408) verwendet wird, und wobei das Anordnen der ausgewählten Pfade in die geordnete Sammlung (1204) durch einen Benutzer ferner das Bestätigen umfasst, dass ein Startpunkt des Transitpfads sich mindestens: innerhalb einer Grenze (303, 409) des Feldes; an der Grenze des Feldes; und innerhalb eines Schwellenabstands zur Grenze des Feldes befindet.

9. Verfahren nach Anspruch 8, wobei ein Endpunkt des Füllpfads (312-314, 401) vom Startpunkt des Transitpfads (320) entfernt ist, wobei das Verfahren ferner das automatische Erzeugen eines Fahrpfads (400) innerhalb des Feldes zwischen dem Endpunkt des Füllpfads und dem Startpunkt des Transitpfads umfasst.

10. Verfahren nach einem der Ansprüche 1-9, das ferner Folgendes umfasst, während das autonome Arbeitsfahrzeug (100, 402) die nacheinander ausgeführten Bewegungen auf einem der zahlreichen Pfade innerhalb des Arbeitsbereichs durchführt:
Empfangen eines Rufsignals von einer mobilen Vorrichtung (202, 701) eines Bedieners;
Bestimmen eines Standorts eines Bedieners in der Nähe einer Grenze (303, 409) des Feldes (316-318, 408);
Bestimmen eines Fahrpfads (400) von einem aktuellen Standort des autonomen Arbeitsfahrzeugs zum Standort des Bedieners;
Anhalten der sequenziell ausgeführten Bewegungen und Bewegen des autonomen Arbeitsfahrzeugs entlang des Fahrpfads; und
Anhalten des autonomen Arbeitsfahrzeugs auf dem Fahrpfad in einem vordefinierten Sicherheitsabstand zum Standort des Bedieners.

11. Verfahren nach einem der Ansprüche 1-10, das ferner umfasst:
Positionieren des autonomen Arbeitsfahrzeugs (100, 402) innerhalb des Feldes (316-318, 408);
Empfangen eines ersten Signals von einer mobilen Vorrichtung (202, 701) eines Bedieners, um eine Geometrie des Feldes zu erfassen, wobei die Geometrie mindestens eine der Folgenden umfasst: eine Begrenzung (303, 409) des Feldes oder ein Hindernis (310, 410) innerhalb des Feldes;
Bestimmen der Positionen der mobilen Vorrichtung, während sich der Bediener entlang der Geometrie bewegt;
autonomes Bewegen des autonomen Arbeitsfahrzeugs entlang der Positionen der mobilen Vorrichtung, wobei das autonome Arbeitsfahrzeug während der Bewegung Fahrzeugpositionen erfasst und die Bewegung beendet, basierend auf der Feststellung, dass sich das autonome Arbeitsfahrzeug innerhalb eines vordefinierten Abstands zu einer letzten Position der mobilen Vorrichtung befindet;
Empfangen eines zweiten Signals vom Bediener, um die Erfassung der Geometrie zu beenden;
Hochladen der Fahrzeugpositionen in das Rechenzentrum (200, 704);
Erzeugen eines Füllpfades (312-314, 401) für das Feld basierend auf den Fahrzeugpositionen; und
Speichern des Füllpfades in den Datenstrukturen (1202), wobei die Vielzahl von Pfaden den Füllpfad umfasst,
wobei optional für jede der Positionen der mobilen Vorrichtung das autonome Fahrzeug einen Dubins-Pfad von einer aktuellen Fahrzeugposition zur Position der mobilen Vorrichtung plant.

12. Verfahren nach Anspruch 2, das ferner das Definieren des mindestens einen Transitpfads (320) durch einen Benutzer umfasst.

13. Verfahren nach einem der vorhergehenden Ansprüche, wobei die mindestens zwei Füllpfade (312-314, 401) mindestens zwei Füllpfade umfassen, die in demselben Feld der Vielzahl der Felder (316-318, 408) definiert sind; und
das Anordnen in eine geordnete Sammlung das Auswählen eines der grafischen Objekte umfasst, die die Datenstrukturen darstellen, welche die mindestens zwei in demselben Feld definierten Füllpfade beschreiben.

14. Rechenzentrum (200, 704), das an ein Weitverkehrsnetzwerk gekoppelt ist und einen oder mehrere Computer umfasst, die so konfiguriert sind, dass sie das Verfahren nach einem der Ansprüche 1-13 durchführen.

15. Computerlesbares Medium, auf dem Befehle gespeichert sind, die so ausgeführt werden können, dass sie das autonome Arbeitsfahrzeug (100, 402) nach einem der Ansprüche 1-13 veranlassen, das Verfahren nach einem der Ansprüche 1-13 durchzuführen.

## Revendications

1. Procédé d'exploitation d'un véhicule autonome (100, 402) dans une région de travail (1200) présentant une pluralité de champs (316-318), chaque champ de la pluralité de champs présentant une zone de travail (306-308) définie par une délimitation (302-304) au sein dudit champ, comprenant :
le stockage d'une pluralité de structures de données (1202), chaque structure de données décrivant un chemin parmi une pluralité de chemins, la pluralité de chemins comprenant au moins deux chemins de remplissage (312-314) et au moins un chemin de transit (320),
les au moins deux chemins de remplissage comprenant un premier chemin de remplissage (312) dans une première zone de travail (306) définie par une première délimitation (302) au sein d'un premier champ (316) et un deuxième chemin de remplissage (313) dans une deuxième zone de travail (307) définie par une deuxième délimitation (303) au sein d'un deuxième champ (317), le premier champ (316) et le deuxième champ (317) étant des champs différents parmi la pluralité de champs (316-318), et
l'au moins un chemin de transit étant utilisé pour relier le premier champ (316) au deuxième champ (317) ;
la présentation d'une pluralité d'objets graphiques, chaque objet graphique représentant une structure de données de la pluralité de structures de données, à un utilisateur par l'intermédiaire d'une interface utilisateur,
l'agencement, lorsque l'utilisateur sélectionne les objets graphiques par l'intermédiaire de l'interface utilisateur, des chemins sélectionnés parmi la pluralité de chemins, les chemins sélectionnés comprenant les au moins deux chemins de remplissage et l'au moins un chemin de transit, en un ensemble ordonné (1204) qui définit de façon regroupée les déplacements et les opérations exécutés de manière séquentielle par le véhicule de travail autonome (100, 402) dans la région de travail ;
le stockage de l'ensemble ordonné par l'intermédiaire d'un centre de données accessible par réseau (200, 704) ;
la sélection, par un opérateur, de l'ensemble ordonné au niveau de la région de travail par l'intermédiaire du centre de données ; et
le téléchargement de l'ensemble ordonné, depuis le centre de données vers le véhicule de travail autonome, en vue de la réalisation des déplacements et opérations exécutés de manière séquentielle dans la région de travail qui sont définis dans l'ensemble ordonné.

2. Procédé selon la revendication 1, comprenant en outre :
la définition, par un utilisateur, de données de délimitation qui définissent une limite (303, 409) d'au moins un desdits champs (316-318, 408), et
la génération automatique d'un ou plusieurs des au moins deux chemins de remplissage (312-314, 401) au niveau du centre de données (200, 704) de sorte que le chemin de remplissage couvre une zone située à l'intérieur de la délimitation.

3. Procédé selon la revendication 2, comprenant en outre la définition, par un utilisateur, de données d'obstacles décrivant un ou plusieurs obstacles (310, 410) au sein du champ (316-318, 408), ladite génération automatique du chemin de remplissage (312-314, 401) comprenant en outre l'évitement des obstacles présents dans le champ.

4. Procédé selon la revendication 3, dans lequel les données de délimitation et les données d'obstacles sont générées lorsqu'un opérateur pilote le véhicule de travail autonome (100, 402) suivant des chemins qui définissent la délimitation (303, 409) et le ou les obstacles (310, 410), le véhicule de travail autonome enregistrant les emplacements de ces chemins et envoyant les emplacements au centre de données (200, 704).

5. Procédé selon la revendication 3, dans lequel les données de délimitation et les données d'obstacles sont générées lorsqu'un appareil mobile (202, 701) d'un opérateur envoie des emplacements au centre de données (200, 704) et que le véhicule de travail autonome (100, 402) se déplace vers les emplacements à moins d'une distance de séparation, les emplacements étant envoyés au centre de données afin de définir la délimitation (303, 409) et le ou les obstacles (310, 410).

6. Procédé selon la revendication 3, dans lequel les données de délimitation et les données d'obstacles dans le champ (316-318, 408) sont générées lorsqu'un opérateur clique sur une carte informatisée de la région de travail (1200) afin de créer des chemins qui définissent la délimitation (303, 409) et le ou les obstacles (310, 410).

7. Procédé selon la revendication 2, comprenant en outre :
le positionnement du véhicule de travail autonome (100, 402) en un point arbitraire à proximité de la délimitation (303, 409) du champ (316-318, 408),
la réception d'un signal provenant d'un opérateur pour mettre en marche le véhicule de travail autonome (100, 402) après son positionnement au point arbitraire,
le téléchargement du chemin de remplissage (312-314, 401) et des données de délimitation sur le véhicule de travail autonome à partir du centre de données (200, 704),
la génération et le chargement dynamiques d'un chemin de traversée (400) allant du point arbitraire jusqu'à un point de départ du chemin de remplissage, et
le déplacement du véhicule de travail autonome suivant le chemin de traversée jusqu'au point de départ (404) du chemin de remplissage et la réalisation de travaux suivant le chemin de remplissage.

8. Procédé selon l'une quelconque des revendications 2 à 7, dans lequel le chemin de transit (320) est utilisé pour sortir du champ (316-318, 408), et l'agencement, par un utilisateur, des chemins sélectionnés en un ensemble ordonné (1204) comprend en outre la vérification que le point de départ du chemin de transit se situe au sein d'une délimitation (303, 409) du champ, se situe sur la délimitation du champ et/ou se situe à moins d'une distance seuil de la délimitation du champ.

9. Procédé selon la revendication 8, dans lequel un point d'arrivée du chemin de remplissage (312-314, 401) est distant du point de départ du chemin de transit (320), le procédé comprenant en outre la génération automatique d'un chemin de traversée (400) au sein du champ entre le point d'arrivée du chemin de remplissage et le point de départ du chemin de transit.

10. Procédé selon l'une quelconque des revendications 1 à 9, comprenant en outre, pendant que le véhicule de travail autonome (100, 402) réalise les déplacements exécutés de manière séquentielle sur l'un des chemins au sein de la région de travail :
la réception d'un signal de rappel provenant d'un appareil mobile (202, 701) d'un opérateur,
la détermination de l'emplacement d'un opérateur à proximité d'une délimitation (303, 409) du champ (316-318, 408),
la détermination d'un chemin de traversée (400) reliant l'emplacement actuel du véhicule de travail autonome à l'emplacement de l'opérateur,
l'arrêt des déplacements exécutés de manière séquentielle et le déplacement du véhicule de travail autonome suivant le chemin de traversée, et
l'arrêt du véhicule de travail autonome sur le chemin de traversée à une distance de sécurité prédéfinie de l'emplacement de l'opérateur.

11. Procédé selon l'une quelconque des revendications 1 à 10, comprenant en outre :
le positionnement du véhicule de travail autonome (100, 402) dans le champ (316-318, 408),
la réception d'un premier signal provenant d'un appareil mobile (202, 701) d'un opérateur afin d'enregistrer la géométrie du champ, la géométrie comprenant une délimitation (303, 409) du champ et/ou un obstacle (310, 410) situé dans le champ,
la détermination des emplacements de l'appareil mobile à mesure que l'opérateur se déplace suivant la géométrie,
le déplacement autonome du véhicule de travail autonome suivant les emplacements de l'appareil mobile, le véhicule de travail autonome enregistrant ses emplacements pendant son déplacement et cessant de se déplacer lorsqu'il détecte qu'il se situe à moins d'une distance de séparation prédéfinie d'un dernier emplacement de l'appareil mobile,
la réception d'un deuxième signal provenant de l'opérateur pour cesser d'enregistrer la géométrie,
le téléchargement des emplacements du véhicule vers le centre de données (200, 704),
la génération d'un chemin de remplissage (312-314, 401) propre au champ en fonction des emplacements du véhicule, et
le stockage du chemin de remplissage dans les structures de données (1202), la pluralité de chemins comprenant le chemin de remplissage ;
pour chacun des emplacements de l'appareil mobile, le véhicule autonome planifiant éventuellement un chemin de Dubins depuis un emplacement actuel de véhicule jusqu'à l'emplacement de l'appareil mobile.

12. Procédé selon la revendication 2, comprenant en outre la définition, par un utilisateur, de l'au moins un chemin de transit (320).

13. Procédé selon l'une quelconque des revendications précédentes, dans lequel les au moins deux chemins de remplissage (312-314, 401) comprennent au moins deux chemins de remplissage définis dans le même champ de la pluralité de champs (316-318, 408), et
l'agencement en un ensemble ordonné comprend la sélection d'un des objets graphiques représentant les structures de données décrivant les au moins deux chemins de remplissage définis dans le même champ.

14. Centre de données (200, 704) couplé à un réseau étendu et comprenant un ou plusieurs ordinateurs conçus pour mettre en œuvre le procédé selon l'une quelconque des revendications 1 à 13.

15. Support lisible par ordinateur sur lequel sont stockées des instructions exécutables pour amener le véhicule de travail autonome (100, 402) selon l'une quelconque des revendications 1 à 13 à réaliser le procédé selon l'une quelconque des revendications 1 à 13.
